# EUROPÄISCHE PATENTSCHRIFT

(11) **EP 2 822 846 B1**
(45) Veröffentlichungstag und Bekanntmachung des Hinweises auf die Patenterteilung: **19.07.2017**
(21) Anmeldenummer: 13700888.4
(22) Anmeldetag: 17.01.2013
(51) Int. Cl.: B62J 27/00, B62K 11/04, A62B 35/00, B60R 22/32, B62J 99/00

(54) **VERFAHREN ZUM LÖSEN EINER RÜCKHALTEEINRICHTUNG FÜR EINEN AUFSAßEN AUF EINEM FAHRZEUG UND EIN DIESBEZÜGLICHES FAHRZEUG**
METHOD FOR RELEASING A RESTRAINT DEVICE FOR A RIDER OF A VEHICLE AND CORRESPONDING VEHICLE
PROCÉDÉ POUR DÉTACHER UN DISPOSITIF DE RETENUE D'UN UTILISATEUR D'UN VÉHICULE ET VÉHICULE CORRESPONDANT

(30) Priorität: 08.03.2012 DE 102012203640
(43) Veröffentlichungstag der Anmeldung: 14.01.2015
(73) Patentinhaber: Robert Bosch GmbH, 70442 Stuttgart (DE)
(72) Erfinder: LICH, Thomas, 71409 Schwaikheim (DE); GEORGI, Andreas, 71229 Leonberg (DE)
(86) Internationale Anmeldenummer: PCT/EP2013/050784
(87) Internationale Veröffentlichungsnummer: WO 2013/131672

(56) Entgegenhaltungen:
- EP-A1- 0 985 360
- DE-A1- 10 317 439
- DE-A1- 19 821 134
- US-A1- 2007 075 533

## Beschreibung

### Stand der Technik

Der Bestand an Motorrädern ist in den letzten Jahren stark angestiegen, so dass im Jahre 2008 rund 33 Mio. motorisierte Zweiräder europaweit zugelassen gewesen sind. Gleichzeitig zeigt sich aber, dass Motorräder mit Abstand das gefährlichste Verkehrsmittel sind. Obwohl der Anteil der motorisierten Zweiradfahrer gerade mal zwei Prozent an allen Verkehrsteilnehmern ausmacht, beträgt ihr Anteil an den gezählten Verkehrstoten in Europa etwa 14 Prozent. Der Motorradfahrer ist im Straßenverkehr einem deutlichen höheren Risiko im Vergleich zum Pkw-Fahrer ausgesetzt. Dies liegt unter anderem an der unterschiedlichen Fahrphysik und dem stets labilen Gleichgewichtszustand, weiterhin an der besonderen physischen und psychischen Beanspruchung beim Motorradfahren sowie an einem eingeschränkten Sichtfeld des Fahrers. Gleichzeitig sind Motorradfahrer deutlich empfindlicher gegenüber Witterungseinflüssen und anderen Störfaktoren wie etwa schlechten Fahrbahnzuständen oder unvorhergesehenen Verkehrssituationen. Aufgrund fehlender Karrosse sind Motorradfahrer trotz Schutzkleidung relativ ungeschützte Verkehrsteilnehmer.

Aus der DE 103 17 439 A1 ist ein Motorrad mit einer Rückhalteeinrichtung für Motorräder mit einem Verbindungselement bekannt, über das der Motorradfahrer lösbar mit dem Motorrad verbunden ist. Bei Vorliegen eines Auffahrunfalls wird der Motorradfahrer während einer ersten Phase des Auffahrunfalls zunächst durch das Verbindungselement am Motorrad gehalten. Die Rückhaltekraft des Verbindungselements wirkt dabei der Trägheitskraft des Motorradfahrers entgegen. Das Verbindungselement ist so angeordnet, dass der Motorradfahrer in der ersten Phase trägheitsbedingt entgegen der Rückhaltekraft des Verbindungselements relativ zum Motorrad verschoben wird. Dabei wird kinetische Energie des Motorradfahrers abgebaut. Anschließend wird das Verbindungselement ohne Zutun des Motorradfahrers gelöst.

### Zusammenfassung der Erfindung

Somit kann ein Bedürfnis bestehen, ein Verfahren bereitzustellen, durch das im Falle eines Sturzes des Motorradfahrers eine Rückhalteeinrichtung gelöst wird, mittels der der Motorradfahrer mit dem Motorrad fest verbunden ist.

Das Bedürfnis kann befriedigt werden durch die Gegenstände der unabhängigen Patentansprüche. Weitere vorteilhafte Ausgestaltungen ergeben sich durch die Gegenstände der abhängigen Patentansprüche.

Gemäß einem ersten Ausgestaltungsbeispiel der Erfindung wird ein Verfahren zum Lösen einer Rückhalteeinrichtung für einen Aufsaßen auf einem Fahrzeug, insbesondere einem Zwei- oder Dreiradfahrzeug bereitgestellt. Die Rückhalteeinrichtung weist ein Verbindungselement auf. Der Aufsaße und das Fahrzeug sind durch das Verbindungselement lösbar miteinander verbunden. Das Verfahren weist folgende Verfahrensschritte auf: Ermitteln eines Neigungswinkels und/oder eines Steigungswinkels des Fahrzeugs. Ermitteln je einer Drehrate um eine Fahrzeuglängsachse und/oder um eine Fahrzeugquerachse. Vergleichen jeder ermittelten Drehrate mit einer zugehörigen kritischen von dem Neigungswinkel und/oder dem Steigungswinkel abhängigen kritischen Drehrate. Lösen des Verbindungselements, wenn die ermittelte Drehrate und die zugehörige kritische Drehrate gleich sind.

Dem vorgeschlagenen Verfahren liegt als Überlegung zugrunde, dass in Abhängigkeit eines Neigungswinkels, welcher auch als Schräglagenwinkel bezeichnet wird, und/oder eines Steigungswinkels, welcher auch als Nickwinkel bezeichnet wird, das Fahrzeug mit einer vorbestimmten Drehrate beaufschlagt werden kann, bis das Fahrzeug kippt und damit der auf dem Fahrzeug aufsitzende Fahrer stürzt. Diese Drehrate, welche hier als kritische Drehrate bezeichnet ist, kann beispielsweise als Kennlinie in einem Steuergerät hinterlegt sein. Durch ein Ermitteln des Neigungswinkels und/oder des Steigungswinkels und einem permanenten Ermitteln der aktuellen Drehrate sowie einem permanenten Vergleich der wenigstens einen ermittelten Drehrate mit der wenigstens einen kritischen Drehrate kann durch das Steuergerät ermittelt werden, wann ein Umkippen des Fahrzeugs durch den Aufsaßen nicht mehr verhinderbar ist. Zu diesem Zeitpunkt wird das Verbindungselement gelöst. Somit findet ein Lösen des Verbindungselements statt, bevor der Aufsaße Bodenkontakt aufgrund eines Sturzes hat. In der Regel kommt es zum Sturz entweder bei einer Kurvenfahrt, bei der das Fahrzeug im Wesentlichen um eine Fahrzeuglängsachse kippt, oder bei einem Anprall an ein Hindernis, bei dem das Fahrzeug im Wesentlichen um eine Fahrzeugquerachse kippt. Während bei einer Kurvenfahrt im Wesentlichen eine Wankrate ermittelt wird, also eine Drehrate oder Drehgeschwindigkeit um die Fahrzeuglängsachse, wird bei einem Anprall an ein Hindernis eine Nickrate, also eine Drehgeschwindigkeit um die Fahrzeugquerachse, ermittelt. Die Drehraten können beispielsweise durch Inertialsensoren, die als Drehratensensoren ausgebildet sein können, erfasst werden. Aufgrund der ermittelten Drehraten können die zugehörigen Winkel in Form von Neigungswinkel und Steigungswinkel mittels entsprechender mathematischer Formeln bzw. Algorithmen berechnet werden. Das Fahrzeug kann als ein Motorrad oder ein Dreirad ausgebildet sein, wobei das Dreirad in der Regel an der Vorderradgabel mit zwei Fahrzeugrädern ausgestattet ist. Es sei angemerkt, dass das Motorrad und/oder das Dreirad mittels einer betätigten Vorderradbremse insbesondere in Verbindung mit einem fehlenden ABS(Anti-Blockier-System)-Bremssystem zu einem Kippen um die Fahrzeugquerachse und in Folge zu einem Überschlag gebracht werden kann. Die Verfahrensabläufe zum Lösen der Rückhalteeinrichtung mittels des Verbindungselements sind sowohl bei einem Anprall an ein Hindernis als auch bei einem Nicken bei einer Vollbremsung die gleichen, so dass im Folgenden zwischen diesen beiden Zuständen nicht unterschieden wird. Natürlich können sich auch die Zustände einer Kurvenfahrt und eines Anpralls an ein Hindernis überlagern, so dass auch für diese Fahrzustände der Zeitpunkt des Lösens des Verbindungselements festgelegt ist. Hierbei kann es zu einem Überlagern der Nickrate und der Wankrate kommen. Die Trennung des Aufsaßen von dem Rückhaltesystem erfolgt vor einem Sturz unabhängig davon, ob es ein bewusst durchgeführtes Fahrmanöver oder ein Fahrfehler gewesen ist.

Gemäß einem weiteren Ausgestaltungsbeispiel der Erfindung wird in weiteren Verfahrensschritten eine translatorische Geschwindigkeit in einer Fahrzeuglängsrichtung und je eine translatorische Geschwindigkeit in einer Fahrzeugquerrichtung und/oder in einer Fahrzeughochrichtung ermittelt. Die ermittelte Wankrate wird durch die jeweils ermittelten translatorischen Geschwindigkeiten verifiziert.

Durch das Verifizieren der ermittelten Wankrate durch die jeweiligen translatorischen Geschwindigkeiten wird ein zusätzlicher Parameter zur Entscheidung hinzugezogen, ob das Verbindungselement gelöst werden soll. So werden durch entsprechende Sensoren, insbesondere Inertialsensoren, bei einer Kurvenfahrt die translatorischen Geschwindigkeiten in Fahrzeuglängsrichtung und in Fahrzeugquerrichtung ermittelt. Bei Anprall an das Hindernis werden die translatorischen Geschwindigkeiten in Fahrzeuglängsrichtung und in Fahrzeughochrichtung ermittelt. Auch hier können entsprechend dem Fahrzustand beispielsweise bei einem Anprall an ein Hindernis bei Kurvenfahrt zur Verifizierung möglicherweise alle drei Geschwindigkeiten in translatorischer Richtung benötigt werden.

Gemäß dem ersten Ausgestaltungsbeispiel der Erfindung wird als weiterer Verfahrensschritt ein Notrufsignal mit einer Information gesendet, wenn die ermittelte Drehrate und die kritische Drehrate gleich sind oder die ermittelte Drehzahl größer als die kritische Drehrate ist.

Dieses Notrufsignal kann beispielsweise an entsprechende Stellen wie Feuerwehr, Polizei zentrale Erfassungsstelle oder Autobahnmeisterei gesendet werden. Auch ist möglich, dass das Notrufsignal an andere Verkehrsteilnehmer gesendet wird, um diese auf die Notsituation des Motorrads, respektive des Aufsaßen, aufmerksam zu machen. Ebenfalls kann das Notrufsignal an eine lokale sich in der Nähe befindenden Empfangsstation gesendet werden, die diese wiederum an Dritte weiterleiten kann. Hierbei wird das Notrufsignal bereits zu einem Zeitpunkt gesendet, bei dem das Motorrad noch nicht gekippt bzw. der Aufsaße noch nicht gestürzt ist, jedoch ein Kippen bzw. Stürzen unausweichlich erscheint. Natürlich kann das Notrufsignal auch gesendet werden, wenn der Sturz bereits stattgefunden hat.

Gemäß einem weiteren Ausgestaltungsbeispiel der Erfindung ist die Information ausgewählt aus einer Gruppe von einem Fahrzeugzustand vor einem Sturz und von einem Ort des Sturzes.

Gerade in Verbindung mit einem GPS(Global Positioning System)-System kann der Ort des Sturzes in Form von GPS-Koordinaten gesendet werden, so dass es Rettungskräften leicht möglich ist, den Ort des Sturzes zu finden. Der Fahrzeugzustand vor einem Sturz kann beispielsweise die Geschwindigkeit des Fahrzeugs, die Richtung des Sturzes oder auch ein potentielle Kollision mit anderen Beteiligten sein.

Gemäß dem ersten Ausgestaltungsbeispiel der Erfindung wird in einem weiteren Verfahrensschritt wenigstens eine an dem Fahrzeug angeordnete und für andere Verkehrsteilnehmer wahrnehmbare Warneinrichtung eingeschaltet, wenn die ermittelte Drehrate und die kritische Drehrate gleich sind oder die ermittelte Drehzahl größer als die kritische Drehrate ist.

Hierdurch können andere Verkehrsteilnehmer gewarnt werden, bevor das Fahrzeug gekippt ist bzw. der Motorradfahrer gestürzt ist. Insbesondere bei einer Kurvenfahrt wird so den dem Motorrad folgenden und/oder dem Motorrad entgegenkommenden Verkehrsteilnehmern signalisiert, dass das besagte Fahrzeug, respektive der Motorradfahrer voraussichtlich stürzen wird. Die Warneinrichtung kann beispielsweise als Warnblinkanlage, als Lichthupe und/oder als Hupe ausgebildet sein.

Die im Vorhergehenden beschriebenen Vorteile bezüglich der einzelnen Merkmale des vorgeschlagenen Verfahrens sind auch für die folgende Vorrichtung gültig, so dass hierbei auf eine Wiederholung verzichtet wird.

Gemäß einem weiteren Ausgestaltungsbeispiel der Erfindung wird ein Fahrzeug, insbesondere ein Zwei- oder Dreiradfahrzeug mit einer Rückhalteeinrichtung für einen Aufsaßen bereitgestellt. Die Rückhalteeinrichtung weist ein Verbindungselement auf. Der Aufsaße und das Fahrzeug sind durch ein Verbindungselement lösbar miteinander verbunden. Ein Steuergerät und ein erster Sensor sind miteinander verbunden. Das Steuergerät und das Verbindungselement sind miteinander verbunden. Der erste Sensor ist eingerichtet, einen Messwert zu erfassen und an das Steuergerät zu übermitteln. Das Steuergerät ist eingerichtet, aus dem Messwert einen Neigungswinkel und/oder einen Steigungswinkel des Fahrzeugs zu ermitteln. Das Steuergerät ist eingerichtet, aus dem Messwert eine Drehrate zu ermitteln. Das Steuergerät ist eingerichtet, die ermittelte Drehrate mit einer von dem Neigungswinkel und/oder dem Steigungswinkel abhängigen kritischen Drehrate zu vergleichen. Wenn die ermittelte Drehrate und die kritische Drehrate gleich sind oder die ermittelte Drehzahl größer als die kritische Drehrate ist, ist das Verbindungselement durch das Steuergerät derart gesteuert, dass die Verbindung des Aufsaßen an das Fahrzeug gelöst wird. Weiterhin sind das Steuergerät und eine Sendevorrichtung miteinander verbunden, wobei die Sendevorrichtung eingerichtet ist, ein Notrufsignal zu senden, wenn die ermittelte Drehrate und die kritische Drehrate gleich sind oder die ermittelte Drehzahl größer als die kritische Drehrate ist. Oder an dem Fahrzeug ist eine für andere Verkehrsteilnehmer wahrnehmbare Warneinrichtung angeordnet, wobei die Warneinrichtung und das Steuergerät miteinander verbunden sind,wobei die Warneinrichtung durch das Steuergerät eingeschaltet wird, wenn die ermittelte Drehrate und die kritische Drehrate gleich sind oder die ermittelte Drehzahl größer als die kritische Drehrate ist.

Gemäß einem weiteren Ausgestaltungsbeispiel der Erfindung sind das Steuergerät und ein zweiter Sensor miteinander verbunden. Der zweite Sensor ist eingerichtet, einen Messwert zu erfassen und an das Steuergerät zu übermitteln. Das Steuergerät ermittelt aus dem Messwert eine translatorische Geschwindigkeit in einer Fahrzeuglängsrichtung und je eine translatorische Geschwindigkeit in einer Fahrzeugquerrichtung und/oder in einer Fahrzeughochrichtung. Die ermittelte Drehrate wird durch die jeweils ermittelten translatorischen Geschwindigkeiten mittels des Steuergeräts verifiziert.

Gemäß einem weiteren Ausgestaltungsbeispiel der Erfindung sind der erste und der zweite Sensor je ein Inertialsensor.

Hierbei kann der Inertialsensor als ein Drehratensensor ausgebildet sein.

Es wird angemerkt, dass Gedanken zu der Erfindung hierin im Zusammenhang sowohl mit einem Verfahren zum Lösen einer Rückhalteeinrichtung als auch mit einem Fahrzeug, insbesondere einem Zwei- oder Dreiradfahrzeug beschrieben sind. Einem Fachmann ist hierbei klar, dass die einzelnen beschriebenen Merkmale auf verschiedene Weise miteinander kombiniert werden können, um so auch zu anderen Ausgestaltungen der Erfindung zu gelangen.

### Kurze Beschreibung der Zeichnungen

Ausführungsformen der Erfindung werden nachfolgend mit Bezug auf die beigefügten Figuren beschrieben. Die Figuren sind lediglich schematisch und nicht maßstabsgetreu.
- Figur 1: zeigt zwei übereinander angeordnete kartesische Koordinatensysteme, in denen ein Winkel, eine ermittelte Drehrate und eine kritische Drehrate über einer Zeitachse aufgetragen sind;
- Figur 2: zeigt eine erste Steueranordnung zum Lösen eines Verbindungselements einer Rückhalteeinrichtung als Prinzipdarstellung;
- Figur 3: zeigt eine zweite Steueranordnung zum Lösen eines Verbindungselements der Rückhalteeinrichtung als Prinzipdarstellung;
- Figur 4: zeigt ein Verfahren zum Lösen des Verbindungselements der Rückhalteeinrichtung als Blockdiagramm; und

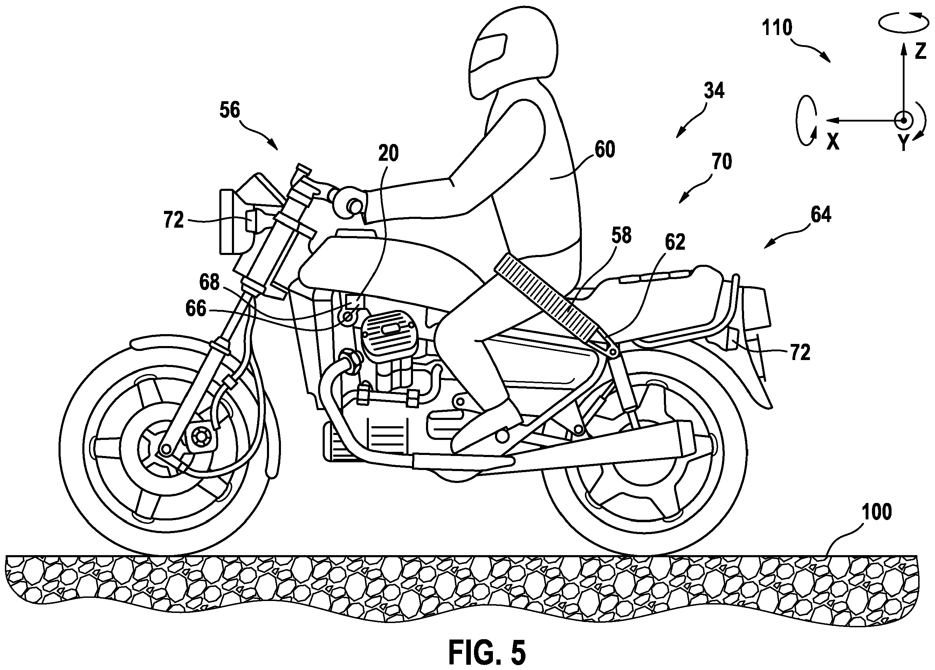

- Figur 5: zeigt ein als Motorrad ausgebildetes Fahrzeug, das zum Ausführen des aus Figur 4 bekannten Verfahrens eingerichtet ist, in einer Seitenansicht.

### Detaillierte Beschreibung beispielhafter Ausführungsformen

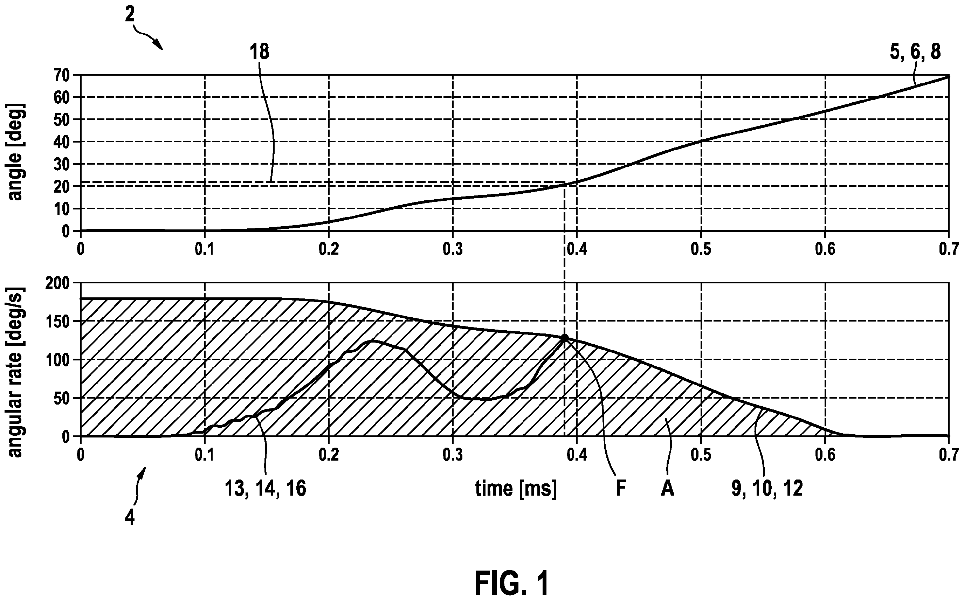

Figur 1 zeigt ein erstes kartesisches Koordinatensystem 2 und ein zweites kartesisches Koordinatensystem 4, die übereinander angeordnet sind. An der Abszisse beider Koordinatensysteme 2, 4 ist eine Zeit in Millisekunden aufgetragen. Eine Ordinate des ersten kartesischen Koordinatensystems 2 zeigt einen Winkel in Grad, wohingegen auf der Ordinate des zweiten kartesischen Koordinatensystems 4 eine Drehrate in Grad pro Sekunde aufgetragen ist. Im ersten Koordinatensystem 2 ist ein Winkel 5 eines Fahrzeugs dargestellt, den das Fahrzeug, insbesondere ein Motorrad oder Dreirad, in Form eines Neigungswinkels 6 oder eines Steigungswinkels 8 einnehmen kann. Im zweiten Koordinatensystem 4 ist eine kritische Drehrate 9 dargestellt, die mit dem Winkel 5 insofern korrespondiert, als dass die kritische Drehrate 9 geringer ist, je größer der Winkel 5 ist. Dies bedeutet, dass das Fahrzeug mit einer umso größeren kritischen Drehrate 9 belastet werden kann, je geringer der Winkel 5 ist, bis das Fahrzeug umstürzt. Zu dem Neigungswinkel 6 korrespondiert eine kritische Wankrate 10 und zu dem Steigungswinkel 8 eine kritische Nickrate 12. Weiterhin ist in dem zweiten Koordinatensystem 4 eine ermittelte Drehrate 13 dargestellt, die als eine zu dem Neigungswinkel 6 ermittelte Wankrate 14 oder als eine zu dem Steigungswinkel 8 ermittelte Wankrate 16 ausgebildet sein kann. Solange sich die ermittelte Drehrate 13 innerhalb einer durch die kritische Drehrate 9 sowie die Abszisse und die Ordinate des zweiten Koordinatensystems 4 begrenzten Fläche A befindet, wird das Fahrzeug während der Fahrt aller Wahrscheinlichkeit nach nicht umstürzen oder umkippen. Wenn jedoch die ermittelte Drehrate 13 gleich der kritischen Drehrate 9 ist, ist von einem Kippen des Fahrzeugs und damit von einem Sturz des auf dem Fahrzeug aufsitzenden Fahrers auszugehen. Zu diesem Zeitpunkt, der hier als Auslösepunkt F bezeichnet ist, wird das Verbindungselement der Rückhalteeinrichtung gelöst, so dass der Fahrer nicht mehr mit dem Fahrzeug verbunden ist. In dem hier vorliegenden Ausführungsbeispiel ist der Auslösepunkt F bei einem Winkel von 22° erreicht. Dies ist hier als gepunktete Linie 18 dargestellt.

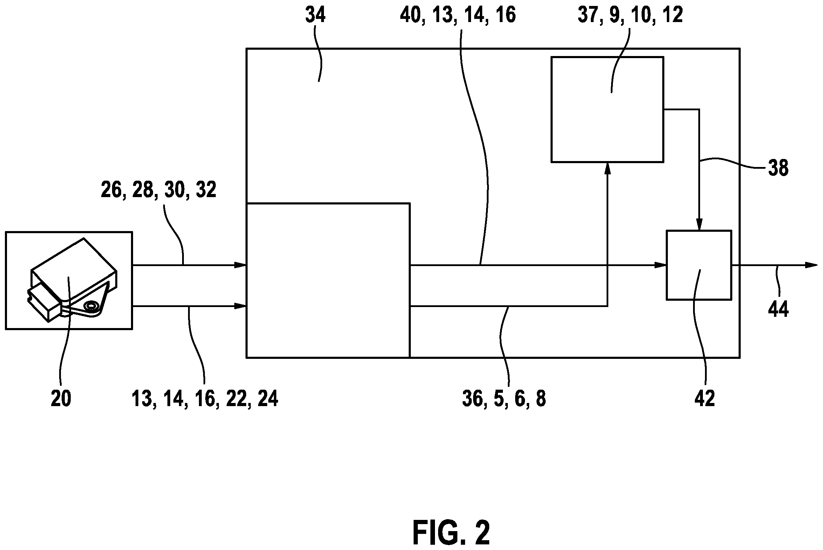

Figur 2 zeigt eine erste Steueranordnung zum Lösen des Verbindungselements der Rückhalteeinrichtung. Von einer Inertialsensoranordnung 20 wird die Drehrate 13, die als Wankrate 14, als Nickrate 16 oder als Gierrate 24 ausgebildet ist, an das Steuergerät 34 übermittelt. Die Übermittlung ist durch einen ersten Pfeils 22 dargestellt. Die Übermittlung kann drahtgebunden oder drahtlos erfolgen. Weiterhin wird durch die Inertialsensoranordnung 20 eine translatorische Geschwindigkeit 28 in Fahrzeuglängsrichtung, eine translatorische Geschwindigkeit 30 in Fahrzeugquerrichtung sowie eine translatorische Geschwindigkeit 32 in Fahrzeughochrichtung ermittelt und an das Steuergerät 34 übermittelt. Diese Übermittlung ist als zweiter Pfeil 26 dargestellt. Mit diesen Messwerten errechnet das Steuergerät 34 einen Winkel 5 in Form des Neigungswinkels 6 und/oder des Steigungswinkels 8. Dieser Winkel 5 wird entlang des dritten Pfeils 36 an den Kennlinienspeicher 37 übermittelt, in dem die kritischen Drehraten 9 in Form von einer kritischer Wankrate 10 und/oder einer kritischer Nickrate 12 abgelegt sind. Diese kritische Drehrate 9 wird einer Entscheidungseinheit 42 übermittelt. In der Entscheidungseinheit 42 wird die kritische Drehrate 9 mit der ermittelten Drehrate 13 in Form der ermittelten Wankrate 14 und/oder der ermittelten Nickrate 16 verglichen, wobei diese Werte entlang eines fünften Pfeils 40 an die Entscheidungseinheit 42 übermittelt werden. Mittels des sechsten Pfeils 44 ist angedeutet, dass in dem vorliegenden Ausführungsbeispiel die ermittelte Drehrate 13 gleich der korrespondierenden kritischen Drehrate 9 oder größer als die korrespondierende kritische Drehrate 9 ist und dementsprechend ein Signal an das Verbindungselement übermittelt wurde, aufgrund dessen das Verbindungselement gelöst wird. Natürlich kann das Steuergerät 34 derart gestaltet sein, dass es lediglich mit der Inertialsensoranordnung 20 verbunden ist und nur das Signal an das Verbindungselement übermittelt.

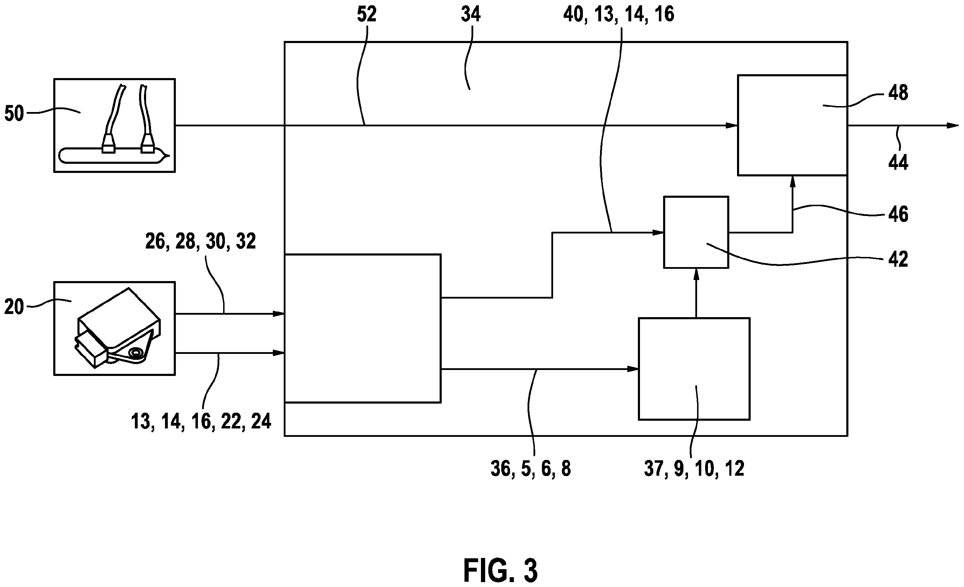

Figur 3 unterscheidet sich von der Darstellung aus Figur 1 dadurch, dass, wenn in der Entscheidungseinheit 42 entschieden wurde, das Verbindungselement zu lösen, diese Information an eine Logikeinheit 48 übermittelt wird, wobei dieser Vorgang durch einen siebten Pfeil 46 dargestellt ist. Mit der Logikeinheit 48 ist ein zweiter Sensor 50 verbunden, wobei der zweite Sensor 50 als ein Quecksilberschalter ausgebildet ist. Der Schaltzustand wird entlang eines achten Pfeils 52 an die Logikeinheit 48 übermittelt. Wenn der Schalter 50 betätigt ist, wird durch die Logikeinheit 48 entschieden, dass das Verbindungselement gelöst wird. Dies ist durch den aus Figur 2 bekannten sechsten Pfeil 44 angedeutet.

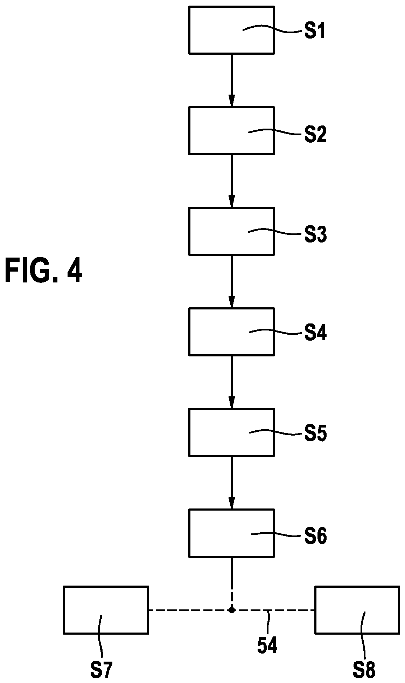

Figur 4 zeigt ein Verfahren zum Lösen einer Rückhalteeinrichtung für einen Aufsaßen auf einem Fahrzeug, insbesondere einem Zwei- oder Dreiradfahrzeug, wobei die Rückhalteeinrichtung ein Verbindungselement aufweist, und der Aufsaße und das Fahrzeug durch das Verbindungselement lösbar verbunden sind. Das Verfahren weist einen ersten Verfahrensschritt S1 auf, bei dem ein Neigungswinkel 6 und/oder ein Steigungswinkel 8 des Fahrzeugs ermittelt wird. In einem zweiten Verfahrensschritt S2 wird je eine Drehrate 13, 14, 16 um eine Fahrzeuglängsachse und/oder eine Fahrzeugquerachse ermittelt. In einem Verfahrensschritt S3 wird jede ermittelte Drehrate 13, 14, 16 mit einer zugehörigen von dem Neigungswinkel 6 und/oder dem Neigungswinkel 8 abhängigen kritischen Drehrate 9, 10, 12 verglichen. In einem Verfahrensschritt S4 wird das Verbindungselement gelöst, wenn die ermittelte Drehrate 13, 14, 16 gleich der zugehörigen kritische Drehrate 9, 10, 12 oder größer als die zugehörige kritische Drehrate 9, 10, 12 ist. In einem fünften Verfahrensschritt S5 wird eine translatorische Geschwindigkeit in einer Fahrzeuglängsachse und in je einer translatorischen Geschwindigkeit in einer Fahrzeugquerachse und/oder in einer Fahrzeughochrichtung ermittelt. In einem sechsten Verfahrensschritt S6 wird die ermittelte Drehrate 13, 14, 16 durch die jeweils ermittelte translatorische Geschwindigkeit verifiziert. Optional wird in einem siebten Verfahrensschritt S7 ein Notrufsignal mit einer Information gesendet, wenn die ermittelte Drehrate 13, 14, 16 gleich der zugehörigen kritischen Drehrate 9, 10, 12 oder größer als die zugehörige kritische Drehrate 9, 10, 12 ist. Bei der Information kann es sich um einen Fahrzeugzustand vor einem Sturz eines Motorradfahrers oder um die Angabe eines Ortes des Sturzes handeln. Die Optionalität ist durch eine gestrichelte Linie 54 angedeutet. Weiterhin kann optional und parallel bzw. alternativ zu dem siebten Verfahrensschritt S7 ein achter Verfahrensschritt S8 ausgeführt werden, der ebenfalls durch die gestrichelte Linie 54 angedeutet ist. In dem achten Verfahrensschritt S8 wird wenigstens eine an dem Fahrzeug angeordnete und für andere Verkehrsteilnehmer wahrnehmbare Warneinrichtung eingeschaltet, wenn die ermittelte Drehrate 13, 14, 16 gleich der kritischen Drehrate 9, 10, 12 oder größer als die kritische Drehrate 9, 10, 12 ist. Mit "X" ist die Fahrzeuglängsrichtung bezeichnet. Eine Drehbewegung um die Fahrzeuglängsrichtung X wird als Wanken bezeichnet. Mit "Y" ist die Fahrzeugquerrichtung bezeichnet. Eine Drehbewegung um die Fahrzeugquerrichtung Y wird als Nicken bezeichnet. Mit "Z" ist die Fahrzeughochrichtung bezeichnet. Eine Bewegung um die Fahrzeughochrichtung Z wird als Gieren bezeichnet. Das Fahrzeug 56 besitzt eine Rückhalteeinrichtung 58 für einen Aufsaßen 60. Die Rückhalteeinrichtung 58 besitzt ein Verbindungselement 62, wobei der Aufsaße 60 und das Fahrzeug 56 durch das Verbindungselement 62 lösbar miteinander verbunden sind. In dem hier vorliegenden Ausführungsbeispiel ist das Verbindungselement 62 lösbar an einem hinteren Rahmenelement 64 des Motorrads 56 befestigt. Das an dem Motorrad 56 angeordnete Steuergerät 34 ist mit der einen ersten Sensor 66 und einen zweiten Sensor 68 beinhaltenden Inertialsensoranordnung 20 ausgebildet. Ferner sind das Steuergerät 34 und das Verbindungselement 62 miteinander verbunden. Mittels des ersten Sensors 66 werden die aktuell anliegenden Drehraten 13, 14, 16 ermittelt, wobei zur Ermittlung jeder Drehrate ein eigener erster Sensor 66 vorgesehen sein kann. Mittels des zweiten Sensors 68 wird eine translatorische Geschwindigkeit in der Fahrzeuglängsrichtung X, in der Fahrzeugquerrichtung Y und/oder in der Fahrzeughochrichtung Z erfasst, wobei zur Ermittlung jeder translatorischen Geschwindigkeit ein eigener zweiter Sensor 68 vorgesehen sein kann. Somit kann die Inertialsensoranordnung 20 zur Ermittlung aller Drehraten und aller translatorischen Geschwindigkeiten aus drei ersten Sensoren 66 und drei zweiten Sensoren 68 bestehen. Hierbei können sowohl der erste Sensor 66 als auch der zweite Sensor 68 je als ein Inertialsensor ausgebildet sein. Ferner sind das Steuergerät 34 und eine Sendevorrichtung 70 miteinander verbunden, wobei die Sendevorrichtung 70 eingerichtet ist, ein Notrufsignal zu senden, wenn die ermittelte Drehrate 13, 14, 16 und die zugehörige kritische Drehrate 9, 10, 12 gleich sind. Des Weiteren ist an dem Fahrzeug 56 eine Warneinrichtung 72 angeordnet, die als Warnblinkanlage ausgebildet ist und damit für andere Verkehrsteilnehmer wahrnehmbar ist. Die Warneinrichtung 72 und das Steuergerät 34 sind miteinander verbunden, wobei die Warneinrichtung 72 durch das Steuergerät 34 eingeschaltet wird, wenn die ermittelte Drehrate 13, 14, 16 und die kritische Drehrate 9, 10, 12 gleich sind.

## Patentansprüche

1. Verfahren zum Lösen einer Rückhalteeinrichtung (58) für einen Aufsaßen (60) auf einem Fahrzeug (56), insbesondere einem Zwei- oder Dreiradfahrzeug,
- wobei die Rückhalteeinrichtung (58) ein Verbindungselement (62) aufweist,
wobei der Aufsaße (60) und das Fahrzeug (56) durch das Verbindungselement (62) lösbar miteinander verbunden sind,
- umfassend das Ermitteln (S1) eines Neigungswinkels (6) und/oder eines Steigungswinkels (8) des Fahrzeugs (56),
**gekennzeichnet durch**,
- Ermitteln (S2) je einer Drehrate (13, 14, 16) um eine Fahrzeuglängsachse (X) und/oder eine Fahrzeugquerachse (Y),
- Vergleichen (S3) jeder ermittelten Drehrate (13, 14, 16) mit einer zugehörigen von dem Neigungswinkel (6) und/oder dem Steigungswinkel (8) abhängigen kritischen Drehrate (9, 10, 12),
- Lösen (S4) des Verbindungselements, wenn die ermittelte Drehrate (13, 14, 16) und die zugehörige kritische Drehrate (9, 10, 12) gleich sind,
sowie
- Senden (S7) eines Notrufsignals mit einer Information oder Einschalten (S8) wenigstens einer an dem Fahrzeug (56) angeordneten und für andere Verkehrsteilnehmer wahrnehmbaren Warneinrichtung (72), wenn die ermittelte Drehrate (13, 14, 16) und die kritische Drehrate (9, 10, 12) gleich sind oder die ermittelte Drehrate (13, 14, 16) größer als die kritische Drehrate (9, 10, 12) ist.

2. Verfahren nach Anspruch 1,
**gekennzeichnet durch**,
Ermitteln (S5) einer translatorischen Geschwindigkeit in einer Fahrzeuglängsrichtung (X) und je einer translatorischen Geschwindigkeit in einer Fahrzeugquerrichtung (Y) und/oder in einer Fahrzeughochrichtung (Z), Verifizieren (S6) der ermittelten Drehrate (13, 14, 16) durch die jeweils ermittelten translatorischen Geschwindigkeiten.

3. Verfahren nach Anspruch 1,
**dadurch gekennzeichnet, dass**
die Information ausgewählt ist aus einer Gruppe von einem Fahrzeugzustand vor einem Sturz und von einem Ort des Sturzes.

4. Fahrzeug, insbesondere ein Zwei- oder Dreiradfahrzeug, mit einer Rückhalteeinrichtung (58) für einen Aufsaßen (60),
- wobei die Rückhalteeinrichtung (58) ein Verbindungselement (62) aufweist,
- wobei der Aufsaße (60) und das Fahrzeug (56) durch das Verbindungselement (62) lösbar miteinander verbunden sind,
- wobei ein Steuergerät (34) und ein erster Sensor (66) miteinander verbunden sind,
- wobei das Steuergerät (34) und das Verbindungselement (62) miteinander verbunden sind,
- wobei der erste Sensor (66) eingerichtet ist, einen Messwert zu erfassen und an das Steuergerät (34) zu übermitteln,
- wobei das Steuergerät (34) eingerichtet ist, aus dem Messwert einen Neigungswinkel (6) und/oder einen Steigungswinkel (8) des Fahrzeugs (56) zu ermitteln,
**dadurch gekennzeichnet, dass**
- das Steuergerät (34) eingerichtet ist, aus dem Messwert eine Drehrate (13, 14, 16) zu ermitteln,
- wobei das Steuergerät (34) eingerichtet ist, die ermittelte Drehrate (13, 14, 16) mit einer von dem Neigungswinkel (6) und/oder dem Steigungswinkel (8) abhängigen kritischen Drehrate (9, 10, 12) zu vergleichen,
- wobei, wenn die ermittelte Drehrate (13, 14, 16, 24) und die kritische Drehrate (9, 10, 12) gleich sind oder die ermittelte Drehzahl (13, 14, 16) größer als die kritische Drehrate (9, 10, 12) ist, das Verbindungselement (62) durch das Steuergerät (34) derart gesteuert ist, dass die Verbindung des Aufsaßen (60) an das Fahrzeug (56) gelöst wird,
- wobei das Steuergerät (34) und eine Sendevorrichtung (70) miteinander verbunden sind und wobei die Sendevorrichtung (70) eingerichtet ist, ein Notrufsignal zu senden, wenn die ermittelte Drehrate (13, 14, 16) und die kritische Drehrate (9, 10, 12) gleich sind oder die ermittelte Drehzahl (13, 14, 16) größer als die kritische Drehrate (9, 10, 12) ist oder wobei an dem Fahrzeug (56) eine für andere Verkehrsteilnehmer wahrnehmbare Warneinrichtung (72) angeordnet ist, wobei die Warneinrichtung (72) und das Steuergerät (34) miteinander verbunden sind, wobei die Warneinrichtung (72) durch das Steuergerät (34) eingeschaltet wird, wenn die ermittelte Drehrate (13, 14, 16) und die kritische Drehrate (9, 10, 12) gleich sind oder die ermittelte Drehrate (13, 14, 16) größer als die kritische Drehrate (9, 10, 12) ist.

5. Fahrzeug nach Anspruch 4,
**dadurch gekennzeichnet, dass**
das Steuergerät (34) und ein zweiter Sensor (68) miteinander verbunden sind,
wobei der zweite Sensor (68) eingerichtet ist, einen Messwert zu erfassen und an das Steuergerät (34) zu übermitteln,
wobei das Steuergerät (34) aus dem Messwert eine translatorische Geschwindigkeit in einer Fahrzeuglängsrichtung (X) und je eine translatorische Geschwindigkeit in einer Fahrzeugquerrichtung (Y) und/oder in einer Fahrzeughochrichtung (Z) ermittelt,
wobei die ermittelte Drehrate (13, 14, 16) durch die jeweils ermittelten translatorischen Geschwindigkeiten mittels des Steuergeräts (34) verifiziert wird.

6. Fahrzeug nach Anspruch 4 oder 5,
**dadurch gekennzeichnet, dass**
der erste Sensor (66) und der zweite Sensor (68) je ein Inertialsensor sind.

## Claims

1. Method for releasing a restraint device (58) for a rider (60) on a vehicle (56), in particular a two-wheeled or three-wheeled vehicle,
- the restraint device (58) having a connecting element (62),
the rider (60) and the vehicle (56) being releasably connected to one another by means of the connecting element (62),
- comprising the determination (S1) of an inclination angle (6) and/or a pitch angle (8) of the vehicle (56),
**characterized by**
- determination (S2) of a respective rotation rate (13, 14, 16) around a vehicle longitudinal axis (X) and/or a vehicle transverse axis (Y),
- comparison (S3) of each determined rotation rate (13, 14, 16) with an associated critical rotation rate (9, 10, 12) dependent on the inclination angle (6) and/or the pitch angle (8),
- release (S4) of the connecting element if the determined rotation rate (13, 14, 16) and the associated critical rotation rate (9, 10, 12) are the same, and
- transmission (S7) of an emergency signal containing an item of information or switching-on (S8) of at least one warning device (72), which is arranged on the vehicle (56) and is perceptible to other road users, if the determined rotation rate (13, 14, 16) and the critical rotation rate (9, 10, 12) are the same or the determined rotation rate (13, 14, 16) is greater than the critical rotation rate (9, 10, 12).

2. Method according to Claim 1,
**characterized by**
determination (S5) of a translational speed in a vehicle longitudinal direction (X) and a respective translational speed in a vehicle transverse direction (Y) and/or in a vehicle vertical direction (Z),
verification (S6) of the determined rotation rate (13, 14, 16) by means of the respectively determined translational speeds.

3. Method according to Claim 1,
**characterized in that**
the information is selected from a group of a vehicle state before a crash and a location of the crash.

4. Vehicle, in particular a two-wheeled or three-wheeled vehicle, having a restraint device (58) for a rider (60),
- the restraint device (58) having a connecting element (62),
- the rider (60) and the vehicle (56) being releasably connected to one another by means of the connecting element (62),
- a control device (34) and a first sensor (66) being connected to one another,
- the control device (34) and the connecting element (62) being connected to one another,
- the first sensor (66) being set up to record a measured value and to transmit it to the control device (34),
- the control device (34) being set up to determine an inclination angle (6) and/or a pitch angle (8) of the vehicle (56) from the measured value,
**characterized in that**
- the control device (34) is set up to determine a rotation rate (13, 14, 16) from the measured value,
- the control device (34) being set up to compare the determined rotation rate (13, 14, 16) with a critical rotation rate (9, 10, 12) dependent on the inclination angle (6) and/or the pitch angle (8),
- the connecting element (62) being controlled by the control device (34) in such a manner that the connection between the rider (60) and the vehicle (56) is released if the determined rotation rate (13, 14, 16, 24) and the critical rotation rate (9, 10, 12) are the same or the determined rotational speed (13, 14, 16) is greater than the critical rotation rate (9, 10, 12),
- the control device (34) and a transmitting apparatus (70) being connected to one another, and the transmitting apparatus (70) being set up to transmit an emergency signal if the determined rotation rate (13, 14, 16) and the critical rotation rate (9, 10, 12) are the same or the determined rotational speed (13, 14, 16) is greater than the critical rotation rate (9, 10, 12) or a warning device (72) which is perceptible to other road users being arranged on the vehicle (56), the warning device (72) and the control device (34) being connected to one another, the warning device (72) being switched on by the control device (34) if the determined rotation rate (13, 14, 16) and the critical rotation rate (9, 10, 12) are the same or the determined rotation rate (13, 14, 16) is greater than the critical rotation rate (9, 10, 12).

5. Vehicle according to Claim 4,
**characterized in that**
the control device (34) and a second sensor (68) are connected to one another,
the second sensor (68) being set up to record a measured value and to transmit it to the control device (34),
the control device (34) determining a translational speed in a vehicle longitudinal direction (X) and a respective translational speed in a vehicle transverse direction (Y) and/or in a vehicle vertical direction (Z) from the measured value,
the determined rotation rate (13, 14, 16) being verified by means of the respectively determined translational speeds by means of the control device (34).

6. Vehicle according to Claim 4 or 5,
**characterized in that**
the first sensor (66) and the second sensor (68) are each an inertial sensor.

## Revendications

1. Procédé pour détacher un dispositif de retenue (58) d'un utilisateur (60) d'un véhicule (56), en particulier d'un véhicule à deux ou trois roues,
- dans lequel le dispositif de retenue (58) comporte un élément d'attache (62),
- dans lequel l'utilisateur (60) et le véhicule (56) sont attachés ensemble de manière libérable au moyen de l'élément d'attache (62),
consistant à
- déterminer (S1) un angle d'inclinaison (6) et/ou un angle de tangage (8) du véhicule (56),
**caractérisé par** les étapes consistant à
- déterminer (S2) une vitesse de lacet (13, 14, 16) autour d'un axe longitudinal (X) du véhicule et/ou d'un axe transversal (Y) du véhicule
- comparer (S3) chaque vitesse de lacet (13, 14, 16) déterminée avec une vitesse de lacet critique (9, 10, 12) correspondante dépendant de l'angle d'inclinaison (6) et/ou de l'angle de tangage (8),
- détacher (S4) l'élément d'attache si la vitesse de lacet (13, 14, 16) déterminée est égale à la vitesse de lacet critique (9, 10, 12) correspondante,
et
- émettre (S7) un signal de détresse contenant une information ou activer (S8) au moins un dispositif d'alarme (72) disposé sur le véhicule (56) et perceptible par un autre usager de la route si la vitesse de lacet (13, 14, 16) déterminée est égale à la vitesse de lacet critique (9, 10, 12) ou si la vitesse de lacet (13, 14, 16) déterminée est supérieure à la vitesse de lacet critique (9, 10, 12).

2. Procédé selon la revendication 1,
**caractérisé par** les étapes consistant à déterminer (S5) une vitesse de translation dans une direction longitudinale (X) du véhicule et une vitesse de translation dans une direction transversale (Y) du véhicule et/ou dans une direction de hauteur (Z) du véhicule, et
vérifier (S6) la vitesse de lacet (13, 14, 16) déterminée à l'aide des vitesses de translations respectives déterminées.

3. Procédé selon la revendication 1,
**caractérisé en ce que** l'information est sélectionnée dans le groupe comprenant un état du véhicule avant une chute et un lieu de la chute.

4. Véhicule, en particulier un véhicule à deux ou trois roues, comportant un dispositif de retenue (58) d'un utilisateur (60),
- dans lequel le dispositif de retenue (58) comporte un élément d'attache (62),
- dans lequel l'utilisateur (60) et le véhicule (56) sont attachés ensemble de manière libérable au moyen de l'élément d'attache (62),
- dans lequel un appareil de commande (34) et un premier capteur (66) sont reliés l'un à l'autre,
- dans lequel l'appareil de commande (34) et l'élément d'attache (62) sont reliés l'un à l'autre,
- dans lequel le premier capteur (66) est conçu pour acquérir une valeur de mesure et pour la transmettre à l'appareil de commande (34),
- dans lequel l'appareil de commande (34) est conçu pour déterminer un angle d'inclinaison (6) et/ou un angle de tangage (8) du véhicule (56) à partir de la valeur de mesure,
**caractérisé en ce que**
- l'appareil de commande (34) est conçu pour déterminer une vitesse de lacet (13, 14, 16) à partir de la valeur de mesure,
- dans lequel l'appareil de commande (34) est conçu pour comparer la vitesse de lacet (13, 14, 16) déterminée avec une vitesse de lacet critique (9, 10, 12) correspondante dépendant de l'angle d'inclinaison (6) et/ou de l'angle de tangage (8),
- dans lequel, si la vitesse de lacet (13, 14, 16, 24) déterminée est égale à la vitesse de lacet critique (9, 10, 12) ou si la vitesse de lacet (13, 14, 16) déterminée est supérieure à la vitesse de lacet critique (9, 10, 12), l'élément d'attache (62) est commandé par l'appareil de commande (34) de manière à détacher l'utilisateur (60) du véhicule (56),
- dans lequel l'appareil de commande (34) et un dispositif d'émission (70) sont reliés l'un à l'autre et dans lequel le dispositif d'émission (70) est conçu pour émettre un signal de détresse si la vitesse de lacet (13, 14, 16) déterminée est égale à la vitesse de lacet critique (9, 10, 12) ou si la vitesse de lacet (13, 14, 16) déterminée est supérieure à la vitesse de lacet critique (9, 10, 12) ou dans lequel un dispositif d'alarme (72) perceptible par d'autres usagers de la route est disposé sur le véhicule (56), dans lequel le dispositif d'alarme (72) et l'appareil de commande (34) sont reliés l'un à l'autre, dans lequel le dispositif d'alarme (72) est activé par l'appareil de commande (34) si la vitesse de lacet (13, 14, 16) déterminée est égale à la vitesse de lacet critique (9, 10, 12) ou si la vitesse de lacet (13, 14, 16) déterminée est supérieure à la vitesse de lacet critique (9, 10, 12).

5. Véhicule selon la revendication 4,
**caractérisé en ce que** l'appareil de commande (34) et un second capteur (68) sont reliés l'un à l'autre,
dans lequel le second capteur (68) est conçu pour acquérir une valeur de mesure et la transmettre à l'appareil de commande (34),
dans lequel l'appareil de commande (34) détermine à partir de la valeur de mesure une vitesse de translation dans une direction longitudinale (X) du véhicule et une vitesse de translation dans une direction transversale (Y) du véhicule et/ou dans une direction de hauteur (Z) du véhicule,
dans lequel la vitesse de lacet (13, 14, 16) déterminée est vérifiée au moyen de l'appareil de commande (34) à l'aide des vitesses de translation respectives déterminées.

6. Véhicule selon la revendication 4 ou 5, **caractérisé en ce que** le premier capteur (66) et le second capteur (68) sont chacun un capteur inertiel.
